# EUROPÄISCHE PATENTSCHRIFT

(11) **EP 3 417 459 B1**
(45) Veröffentlichungstag und Bekanntmachung des Hinweises auf die Patenterteilung: **18.09.2019**
(21) Anmeldenummer: 17706159.5
(22) Anmeldetag: 25.01.2017
(51) Int. Cl.: G21C 9/06, B01J 12/00, B01J 35/00, F23Q 3/00, G21C 19/317, F23Q 7/10

(54) **ZÜNDSYSTEM ZUR ZÜNDUNG BRENNBARER GASGEMISCHE**
IGNITION SYSTEM FOR IGNITING COMBUSTIBLE GAS MIXTURES
SYSTÈME D'ALLUMAGE CONÇU POUR ALLUMER DES MÉLANGES GAZEUX COMBUSTIBLES

(30) Priorität: 17.02.2016 DE 102016202452
(43) Veröffentlichungstag der Anmeldung: 26.12.2018
(73) Patentinhaber: FRAMATOME GMBH, 91052 Erlangen (DE)
(72) Erfinder: HILL, Axel, 64589 Stockstadt (DE)
(74) Vertreter: Kugler, Jörg
(86) Internationale Anmeldenummer: PCT/EP2017/051513
(87) Internationale Veröffentlichungsnummer: WO 2017/140467

(56) Entgegenhaltungen:
- WO-A1-2014/025446
- CN-U- 203 882 626
- DE-A1-102006 009 081

## Beschreibung

Die Erfindung betrifft ein Zündsystem zur Zündung brennbarer Gase oder Gasgemische. Sie betrifft des Weiteren eine kerntechnische Anlage mit einem derartigen Zündsystem sowie eine zugehöriges Verfahren.

Bei einem schweren Störfall (engl. severe accident) in einer kerntechnischen Anlage, insbesondere einem Kernkraftwerk, kann es neben der Freisetzung von Dampf zur Freisetzung großer Mengen Wasserstoff kommen, insbesondere durch die bekannte Zirkon-Wasser-Reaktion an überhitzen Brennstabhüllrohren. Ohne Gegenmaßnahmen sind explosive (auch detonationsfähige) Gemische, die bei einer unkontrollierten Reaktion die Integrität des üblicherweise als Containment bezeichneten Sicherheitseinschlusses gefährden, nicht auszuschließen.

Zur Reduktion des in die Containment-Atmosphäre freigesetzten Wasserstoffs werden zurzeit vor allem passive autokatalytische Rekombinatoren (PARs) weltweit eingesetzt. Rekombinatoren sind in einem entscheidenden Zeitraum bis ca. 1 Stunde nach Beginn der Freisetzung jedoch nur sehr begrenzt wirksam. In dieser Anfangsphase werden lediglich 10 bis 20 % der freigesetzten rekombinierbaren Gasmenge tatsächlich katalytisch umgesetzt. Rekombinatoren können somit unter Umständen explosionsfähige Gemische nicht verhindern, diese aber ungünstig zu einem späten Zeitpunkt zünden. Die hieraus resultierenden Verbrennungslasten (Drücke, Missiles) müssen vom Containment abgetragen werden.

Für die Begrenzung schneller Wasserstofffreisetzungen, die durch die limitierte Abbaukapazität der Rekombinatoren nicht mehr kompensierbar sind, werden vor allem in US-Anlagen elektrisch betriebene Glühzünder eingesetzt. Die elektrisch betriebenen Zünder werden hierbei überwiegend mit Notstrom aus dem Dieselnetz betrieben. Im Fall eines Station Black-Out können die Zünder, die vom Notstromdieselaggregat gespeist werden, nicht mehr betrieben werden und sind somit hinsichtlich der Begrenzung transienter Wasserstofffreisetzungen wirkungslos.

Eine Nachrüstung von zusätzlichen Zündern am unterbrechungslosen Notstromnetz ist durch die limitierte Kapazität der batteriegestützten Notstromversorgung oftmals schwierig bis unmöglich. Des Weiteren benötigen die zurzeit eingesetzten aktiven elektrischen Glühzünder eine relativ große elektrische Leistung, um die Zündung einzuleiten (typischerweise > 500 Watt).

Ein Zünder, der auf katalytischer Basis funktioniert, wird in EP 0 596 964 A1 beschrieben. Dieser Zünder-Typ benötigt keine externe Energieversorgung und leitet die Zündung durch Wärmeleitung in ein noch nicht abgereichertes wasserstoffhaltiges Gasgemisch ein, indem die erforderliche Zündtemperatur an der Oberfläche von dünnen Platin-Zündfäden, die in das Gasgemisch ragen, überschritten wird. Die hierzu erforderliche Wärme / Energiemenge wird durch exotherme katalytische Wasserstoff-Rekombination an einem Katalysatorkörper erzeugt und durch Wärmeleitung direkt auf die Zündfäden übertragen. Ein derartiger katalytischer Zünder kann eine Zündung aber erst relativ spät nach Überschreiten der Zündgrenze bei einem Wasserstoffanteil zwischen 6 und 10 Vol.-% (in Abhängigkeit von der Dampfkonzentration) einleiten.

Ein weiteres Zündsystem ist aus der JP H07 63891 A bekannt.

Ziel ist es, die Zündung einer sanften Deflagration so früh wie möglich bei kleinen Wasserstoff-Konzentrationen < 6 Vol.-% möglichst kurz nach Überschreiten der unteren Zündgrenze herbeizuführen, damit die durch die Reaktion verursachten Verbrennungslasten so gering wie möglich bleiben. Eine möglichst frühe Zündung wirkt somit sicherheitsgerichtet und lastminimierend für die Strukturen innerhalb des Containments sowie für die eigentliche Containmenthülle.

Aufgabe der Erfindung ist es, ein möglichst autonom arbeitendes Zündsystem bereitzustellen, welches bei einfach gehaltenem Aufbau eine zuverlässige Zündung brennbarer Gasgemische bereits knapp oberhalb der Zündgrenze ermöglicht. Des Weiteren soll ein entsprechendes Verfahren angegeben werden.

Die genannte Aufgabe wird in Bezug auf die Vorrichtung erfindungsgemäß gelöst durch die Merkmale des Anspruchs 1 und in Bezug auf das Verfahren durch die Merkmale des Anspruchs 7.

Vorteilhafte Ausgestaltungen und Weiterentwicklungen sind Gegenstand der abhängigen Ansprüche sowie der nachfolgenden Beschreibung.

Zur Einleitung einer gesteuerten (im Sinne von kausal vorhersehbar, bei definierten Rahmenbedingungen) Zündung bei möglichst geringen Konzentrationen wird erfindungsgemäß ein Zündsystem konstruiert, das die zur Zündung benötigte Energie passiv erzeugt und in das Gasgemisch einleitet. Das passive Zündsystem beinhaltet als wesentliches Element einen thermoelektrischen Generator (TEG) oder kurz Thermogenerator.

Die TEG-Elemente sind auf der heißen Seite über einen Wärmeleiter mit einer Wärmequelle verbunden. Die Wärmequelle kann eine heiße Oberfläche (mit einer Temperatur von beispielsweise 150 bis 500 °C) sein, etwa eine Rohrleitungsoberfläche einer mit heißem Medium gefüllten Leitung oder die Oberfläche eines Behälters. In einer bevorzugten Alternative wird die zur Stromerzeugung benötigte Wärme durch eine passive katalytische Reaktion eines autokatalytischen Rekombinators erzeugt.

Die kalte Seite des TEGs ist thermisch an eine Wärmesenke gekoppelt. Beispielsweise ist sie über einen Wärmeleiter mit einem Aluminiumkörper verbunden. In diesen Wärmeleitblock ist bevorzugt ein Wärmerohr (engl. heat pipe) thermisch eingebunden, welches die Wärme bevorzugt über ein Bündel von Wärmeleitblechen oder dergleichen effektiv an die Umgebung abgibt. Bevorzugt wird die Wärmeabgabe an die Umgebung durch Naturzugkühler bzw. durch natürliche Konvektion unterstützt.

Der TEG erzeugt aus dem Wärmefluss direkt elektrische Energie. Durch den Wärmefluss von der geheizten zur gekühlten Seite wird in dem Halbleitermaterial des TEGs durch den Seebeck-Effekt eine elektrische Spannung erzeugt. Die freien Elektronen im Metall haben auf der warmen Seite eine höhere Beweglichkeit und damit eine höhere Energie als auf der kälteren Seite. Da jedes System den energetisch günstigsten Zustand anstrebt, bewegen sich die Elektronen von der warmen zur kälteren Seite. Dabei wird eine elektrische Spannung und bei geschlossenem Stromkreis ein elektrischer Strom erzeugt. Der TEG gewinnt somit passiv aus der anliegenden Temperaturdifferenz eine Thermospannung. Je größer die Temperaturdifferenz, desto höher ist die Spannung, die ein TEG erzeugen kann.

Die so erzeugte / umgewandelte Energie wird genutzt, um mittels eines Zündelements die benötigte Zündenergie in ein zündfähiges Gasgemisch einzutragen und eine gewollte Zündung bei möglichst geringer Konzentration kurz nach Überschreiten der unteren Zündgrenze einzuleiten.

Das Zündelement kann beispielsweise als einfache Heizdrahtwendel oder als Glühkerze ausgebildet sein. Wenn das Zündelement alternativ einen Zündfunken erzeugen soll, umfasst es die hierfür notwendigen Bauteile (wie z. B. Kondensatoren und Transistoren).

Zusammengefasst betrifft ein wesentliches Anwendungsfeld der Erfindung alle Reaktortypen, bei denen es während eines schweren Störfalls zu einer Wasserstofffreisetzung, z. B. durch Zirkon-Wasser-Reaktion, kommen kann und die ein Containment besitzen. Bei einem auslegungsüberschreitenden Störfall können nämlich große Mengen Wasserstoff in die Containmentatmosphäre freigesetzt werden. Die Wasserstoff-Freisetzungsrate kann dabei so groß sein, dass bisherige Wasserstoff-Abbaumaßnahmen (z. B. mittels PARs) die Bildung von explosionsfähigen Gemischen mit hohen Wasserstoff-Konzentrationen nicht verhindern können.

Deshalb soll mit dem erfindungsgemäßen Zündsystem die Bildung von gefährlichen Gasgemischen durch das Konzept der frühen absichtlichen Zündung vermieden werden. Die passiv wirkenden Zünder sollen das Gasgemisch im Bereich der unteren Zündgrenze frühzeitig zünden. Entsprechend der Konstruktion und Auslegung der Zünder läuft die Verbrennung als sanfte Deflagration ab. Es treten keine risikorelevanten Belastungen für das Containment auf. Freisetzungen, die zu hohen Konzentrationen mit hohem Gefährdungspotential führen könnten, werden schon frühzeitig in ihrer Entstehung vermieden.

Die Vorteile des erfindungsgemäßen Systems lassen sich stichpunktartig wie folgt zusammenfassen:
- Passive Erzeugung der Zündenergie
- Einleitung der Zündung kurz nach Überschreiten der Zündgrenze
- Bereitstellung der Zündenergie schon vor dem Überschreiten der Zündgrenze
- Keine Erweiterung von Batteriekapazität bei Nachrüstung von Zündern notwendig
- Kompakte Bauweise, kleine Bauteilabmessungen
- Einsatz einer größeren Anzahl von Zündern zur Abdeckung von Räumen und Volumina problemlos möglich
- Wartungsarm

Weitere Ausgestaltungen und Vorteile gehen hervor aus den abhängigen Ansprüchen sowie der nachfolgenden detaillierten Beschreibung.

Verschiedene Ausführungsbeispiele der Erfindung werden nachfolgend anhand von Zeichnungen näher erläutert. Es zeigen in stark vereinfachter und schematischer Darstellung:
- FIG. 1: eine allgemeine Übersicht über ein erfindungsgemäßes Zündsystem,
- FIG. 2-4: eine erste Variante des Zündsystems in Draufsicht, in perspektivischer Ansicht und in teilweise geschnittener perspektivischer Ansicht,
- FIG. 5: eine zweite Variante des Zündsystems in Draufsicht, und
- FIG. 6-7: eine dritte Variante des Zündsystems in Draufsicht und in Seitenansicht (Längsschnitt).

Gleiche oder gleich wirkende Teile sind in allen Figuren mit denselben Bezugszeichen versehen.

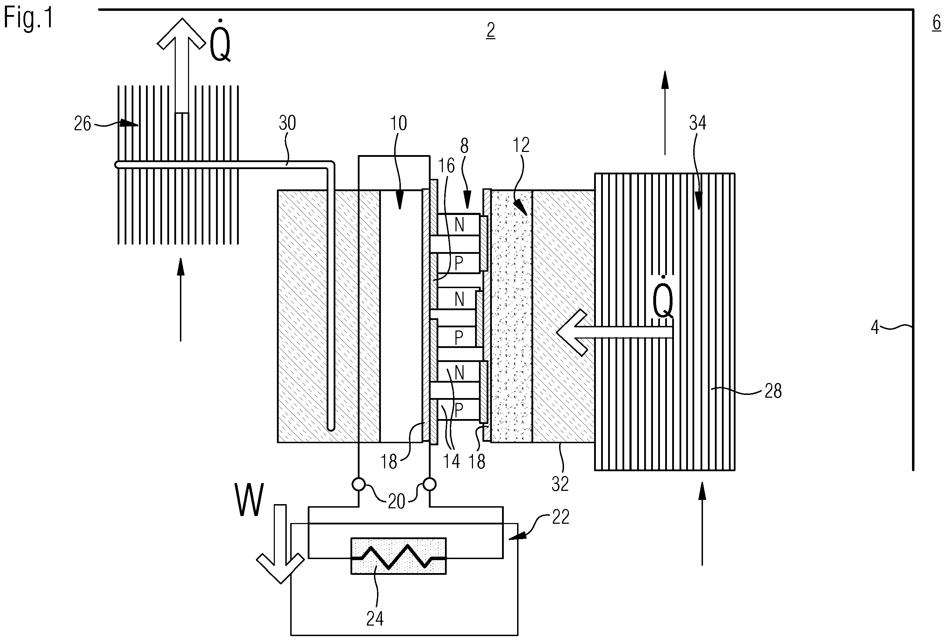

FIG. 1 zeigt in einer schematischen Übersicht ein Zündsystem 2 zur Zündung eines brennbaren Gasgemisches, welches sich insbesondere in einem Containment 4 einer kerntechnischen Anlage, speziell eines Kernkraftwerks 6, bei einem schweren Störfall ausbilden kann.

Das Zündsystem 2 ist für einen autonomen und passiven Betrieb ausgebildet und umfasst als wesentliches Element einen thermoelektrischen Generator (TEG) 8, der gemäß dem Seebeck-Effekt eine Temperaturdifferenz oder einen Wärmefluss zwischen einer relativ kalten Seite 10 und einer im Vergleich dazu heißen Seite 12 direkt in eine Thermospannung umwandelt. Der thermoelektrische Generator 8 umfasst zu diesem Zweck beispielsweise eine Mehrzahl von elektrisch in Reihe geschalteten N- und P-dotierten Halbleiterelementen 14, die unter Ausbildung von dazwischen liegenden Grenzflächen 16 (engl. junctions) zwischen der kalten Seite 10 und der heißen Seite 12 angeordnet sind. Die Grenzflächen 16 sind dabei durch jeweils ein gut wärmeleitendes elektrisches Isolatorelement, etwa eine keramische Schicht 18, gegenüber den elektrisch leitenden Komponenten der Umgebung isoliert.

Am ersten und am letzten Halbleiterelement 14 der Reihenschaltung befinden sich elektrische Anschlüsse 20 zum Abgriff der Thermospannung. Ein mit den Anschlüssen 20 verbundener Zündstromkreis 22 enthält ein in einigem Abstand zum thermoelektrischen Generator 8 angeordnetes Zündelement 24 in Form eines Heizdrahtes oder einer Glühkerze. Bei hinreichend hoher Thermospannung oder hinreichend starkem Stromfluss (Gleichstrom, engl. DC) im Zündstromkreis 22 wird das Zündelement 24 aktiviert und löst eine Zündung im umliegenden Gasgemisch aus, sofern dieses zündfähige Konzentrationsverhältnisse aufweist.

Für eine hohe Effektivität des thermoelektrischen Generators 8 ist dessen kalte Seite 10 thermisch an eine Wärmesenke 26 gekoppelt, während die heiße Seite 12 thermisch an eine Wärmequelle 28 gekoppelt ist. Dadurch wird eine gleichbleibend hohe Temperaturdifferenz gewährleistet.

Die Wärmesenke 26 kann sich in einiger Entfernung zum thermoelektrischen Generator 8 befinden, wobei die thermische Kopplung und Wärmeabfuhr (abgeführter Wärmestrom dQ/dt) in diesem Fall vorzugsweise durch passive Wärmerohre 30 (engl. heat pipes) bewerkstelligt wird. Die Wärmequelle 28 hingegen befindet sich vorzugsweise in möglichst direktem thermischem Kontakt mit dem thermoelektrischen Generator 8, gegebenenfalls mit einem dazwischen liegenden Wärmeleiter 32 als Verbindungselement.

In bevorzugter Ausgestaltung wird die Wärmequelle 28 durch einen passiven autokatalytischen Rekombinator (PAR) 34 gebildet, der beispielswiese Wasserstoff und Sauerstoff in einem umliegenden oder vorbei strömenden Gasgemisch flammenlos zu Wasserdampf rekombiniert und sich dabei infolge der exothermen Reaktion erwärmt (zugeführter Wärmestrom dQ/dt). Alternativ oder zusätzlich kann beispielsweise eine katalytische Umsetzung von Kohlenmonoxid und Sauerstoff zu Kohlendioxid vorgesehen sein.

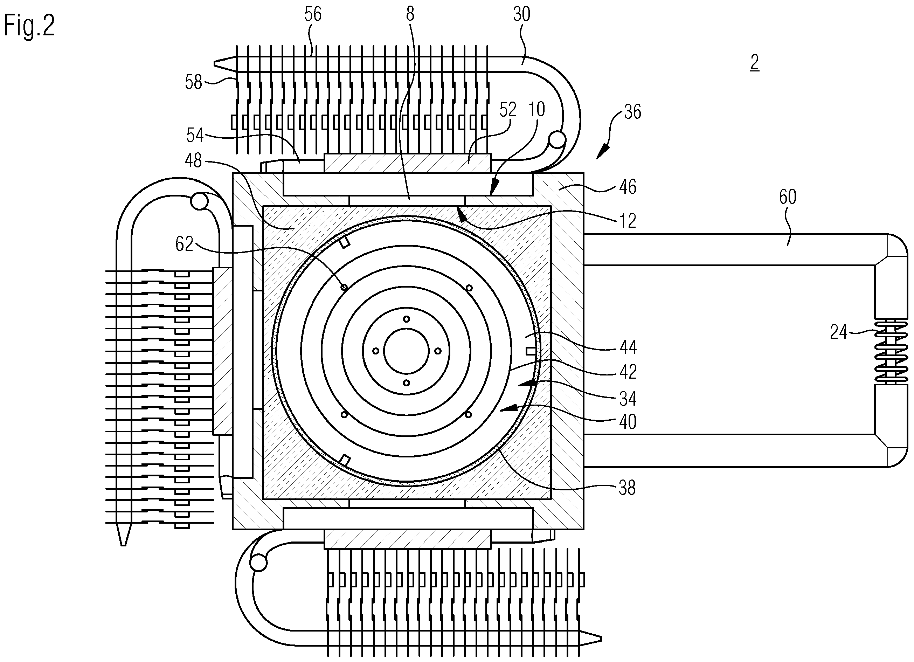

Eine erste Variante einer konkreten Realisierung dieses Konzeptes ist in FIG. 2 bis 4 dargestellt. Die verschiedenen Komponenten des Zündsystems 2 sind dabei in einer kompakten Anordnung zu einer gemeinsamen Zündeinheit 36 zusammengefügt.

Im Zentrum der Zündeinheit 36 befindet sich ein von einer zylindrischen Rohrwand 38 begrenzter, endseitig jeweils offener Strömungskanal 40. In der gewöhnlichen Einbau- oder Montagesituation ist der Strömungskanal 40 vertikal ausgerichtet und von einem Gasgemisch durchströmbar, aufgrund der sich einstellenden Kaminwirkung in der Regel von unten nach oben. Der Strömungskanal 40 ist durch konzentrisch zur Mittelachse angeordnete zylindrische Zwischenwände 42 in mehrere parallel durchströmbare Ringkammern 44 unterteilt. Die Zwischenwände 42 und gegebenenfalls auch die äußere Rohrwand 38 enthalten im oben beschriebenen Sinne katalytisch wirksame Oberflächen, Beschichtungen oder Zonen für die Katalyse der Rekombinationsreaktion im vorbei geleiteten Gasstrom, insbesondere von Wasserstoff mit Sauerstoff.

Die Geometrie des Strömungskanals 40 und seiner Unterteilungen kann insbesondere ausgeführt sein wie in EP 0 596 964 A1 beschrieben. Entsprechendes gilt für die Anordnung von optional vorhandenen Zünddrähten (siehe weiter unten). Die Ausführung der Katalysatoren erfolgt bevorzugt durch Beschichtung eines Trägerbleches wie in EP 0 923 707 B1 beschrieben mit einem Palladiumstreifen zur schnellen Einleitung der katalytischen Reaktion. Der Inhalt dieser beiden Vorveröffentlichungen wird hiermit ausdrücklich zum Bestandteil des vorliegenden Textes erklärt.

Die bei der exothermen Rekombinationsreaktion freigesetzte Wärme dient zur Beheizung mindestens eines thermoelektrischen Generators 8 an dessen heißer Seite 12. Im vorliegenden Fall ist der Strömungskanal 40 von einem im Querschnitt viereckigen und insbesondere quadratischen Gehäuse 46 umgeben, wobei die Zwischenräume zwischen der Außenseite der Rohrwand 38 und der Innenseite des Gehäuses 46 mit einem gut wärmeleitenden Füllmaterial 48 ausgefüllt sind. Beispielsweise sind an drei der vier seitlichen Außenflächen des quaderförmigen Gehäuses 46 thermoelektrische Generatoren 8 montiert. Jeder der thermoelektrischen Generatoren 8 hat im hier gezeigten Beispiel einen flachen plattenförmigen Umriss, wobei die als heiße Seite 12 wirksame innere Basisfläche dem Füllmaterial 48 zugewandt ist und mit diesem gut wärmeleitend verbunden ist. Das Gehäuse 46 ist hierzu mit geeigneten Durchbrechungen versehen. Die als kalte Seite 10 wirksame äußere Basisfläche zeigt vom Gehäuse 46 weg.

Zur Verbesserung der Kühlung und Wärmeabfuhr von der kalten Seite 10 des jeweiligen thermoelektrischen Generators 8 sind ein oder mehrere Wärmerohre 30 an die kalte Seite 10 thermisch angekoppelt, hier mittels einer gut wärmeleitenden Verbindungsplatte 52, etwa aus Aluminium (in Bezug auf das Wärmerohr 30 ist die , kalte Seite' 10 des thermoelektrischen Generators 8 als Wärmequelle zu verstehen). Das jeweilige Wärmerohr 30 besitzt eine U-förmige Gestalt, wobei einer der beiden Schenkel 54 an der Verbindungsplatte 52 oder direkt an der kalten Seite 10 des thermoelektrischen Generators 8 anliegt, und der andere Schenkel 56 vom Gehäuse 46 wegführt oder wie hier gezeigt in einigem Abstand parallel zu diesem verläuft. Das jeweilige Wärmerohr 30 enthält ein Wärmetransportmedium, welches bevorzugt in einem natürlichen Kreislauf zwischen dem als Verdampfer für das Wärmetransportmedium wirksamen, relativ heißen Schenkel 54 und dem als Kondensator wirksamen, relativ kalten Schenkel 56 zirkuliert. An letzterem erfolgt eine Wärmeabgabe an die Umgebung. Ein die Wärmerohre 30 umgebendes Gitter aus Wärmeleitblechen 58 (Kühlrippen) optimiert den Wärmeübergang an die Umgebungsatmosphäre.

Anstelle von schwerkraftgetriebenen und/oder durch Kapillarwirkung getrieben Wärmerohren mit Zweiphasen-Kühlkreislauf können auch Wärmerohre mit Einphasen-Kühlreislauf (reiner Thermosiphon) zum Einsatz kommen, die aber in Bezug auf den Wärmetransport nicht so effektiv sind.

Seitlich am Gehäuse 46 montierte und nach außen abstehende Trägerarme 60 halten in einiger Entfernung von Gehäuse 46 ein Zündelement 24, beispielsweise in Gestalt eines Heizdrahtes oder einer Glühkerze.

Die Leiter oder Kabel der zugehörigen elektrischen Anschlussleitung verlaufen vorteilhafterweise innerhalb der als Mantelrohre ausgebildeten Trägerarme 60. Die thermoelektrischen Generatoren 8 können je nach Anforderung bezüglich der von Ihnen erzeugten Thermospannung elektrisch in Reihe oder parallel geschaltet sein. Sobald der Strömungskanal 40 von einem rekombinationsfähigen Gasgemisch durchströmt wird, setzt die exotherme Rekombinationskombination an den katalytisch aktiven Zonen des Rekombinators 34 ein und setzt die Erzeugung der Thermospannung im thermoelektrischen Generator 8 in Gang. Die benötigte Zündenergie zur Zündung des Gasgemischs kann damit bereits vor Erreichen der unteren Zündgrenze erzeugt werden, so dass die Zündung durch das Zündelement 24 dann direkt nach Überschreiten dieser Grenze erfolgen kann.

Typischerweise erzeugen die thermoelektrischen Generatoren 8 eine elektrische Leistung von 5 bis 200 W, mittels derer ein Zünddraht / Heizwendel des Zündelements 24 auf Zündtemperatur (typischerweise > 500 °C) gebracht wird.

Darüber hinaus kann der katalytische Rekombinator 34 auch selber als Zünder für das Gasgemisch tätig sein. Dies ist insbesondere dann der Fall, wenn durch (großvolumige, globale) transiente Gasverschiebungsvorgänge innerhalb der Umgebung oder durch extrem schnelle Freisetzungen zündfähiger Gasgemische eine plötzliche massive Anströmung erfolgt, die die Oberfläche der katalytisch aktiven Zonen auf hohe Temperaturen (typischerweise > 500 °C) aufheizt. Zur Unterstützung dieses alternativen Zündmechanismus können Zünddrähte 62 vorhanden sein, die am einen Ende mit den katalytisch aktiven Zonen verbunden sind und durch diese auf Zündtemperatur geheizt werden und am anderen Ende in den Strömungskanal 40 hineinragen. In Bezug auf die Details zu diesem Zündmechanismus wird auf die bereits erwähnte Vorveröffentlichung EP 0 596 964 A1 verwiesen.

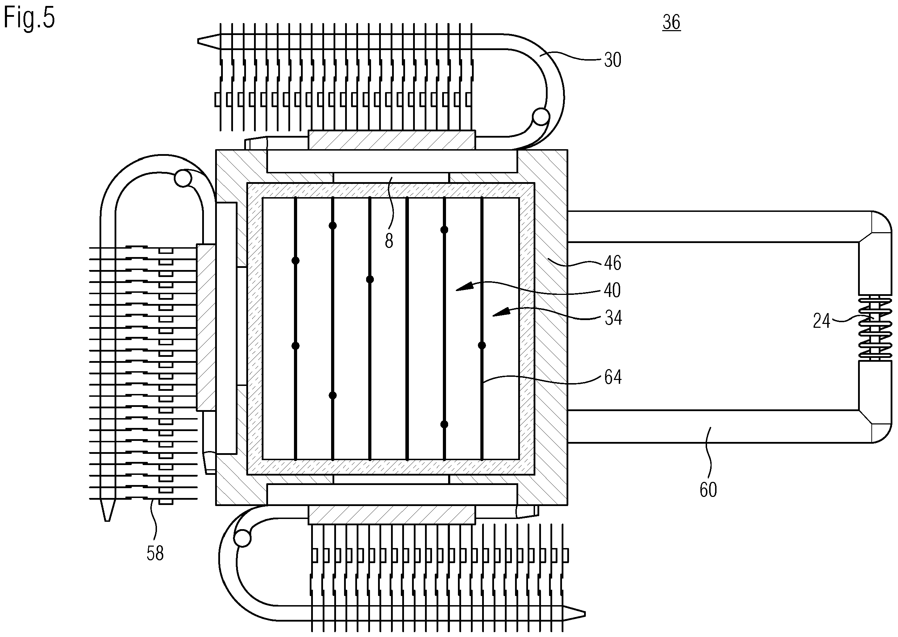

Die in FIG. 5 dargestellte Variante des Zündsystems 2 unterscheidet sich von der bislang beschriebenen Variante lediglich in der Geometrie des Strömungskanals 40, welcher hier einen rechteckigen Querschnitt hat und durch mehrere flache Platten 64 mit katalytischer Beschichtung oder katalytischen Zonen in quaderförmige Teilkanäle unterteilt ist.

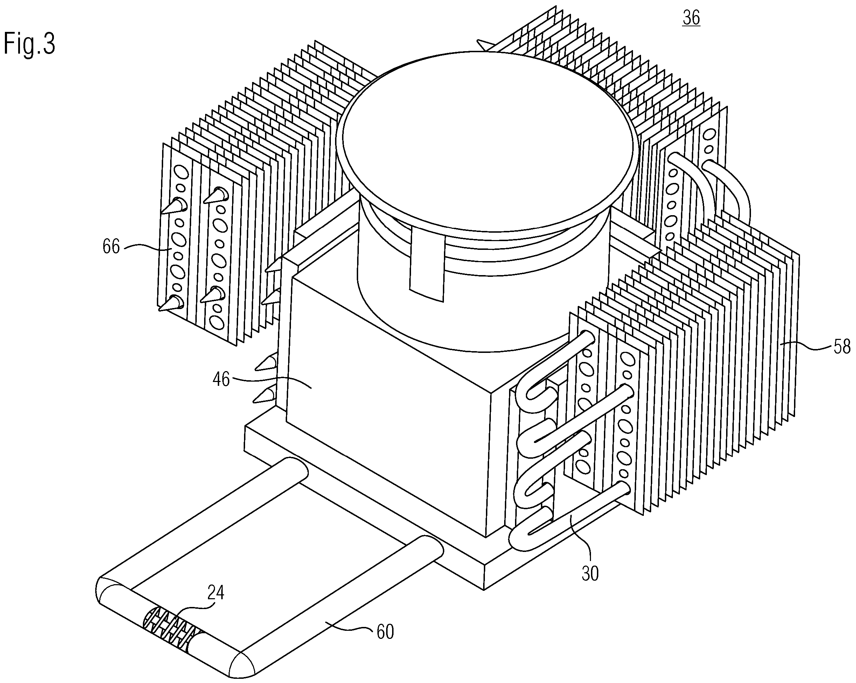

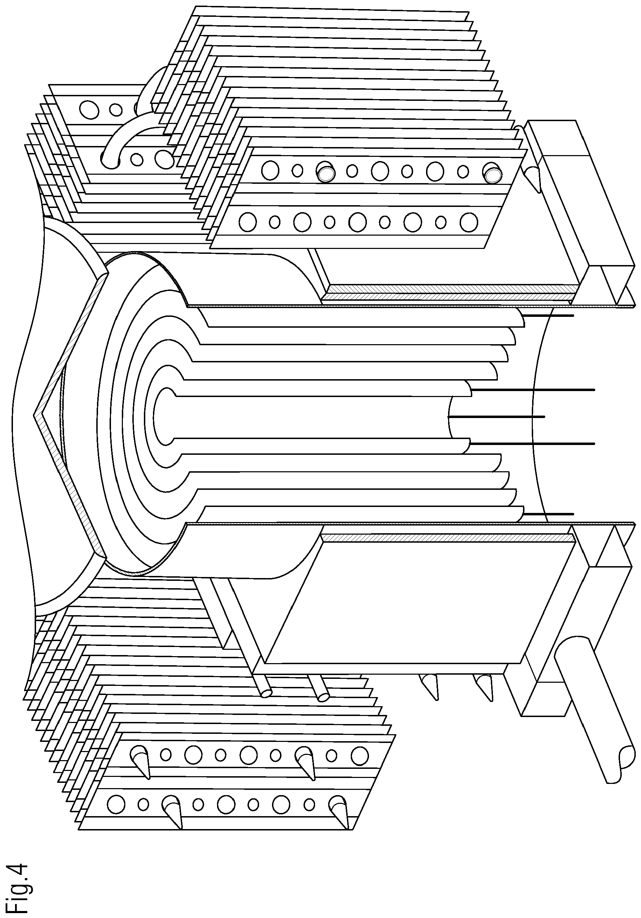

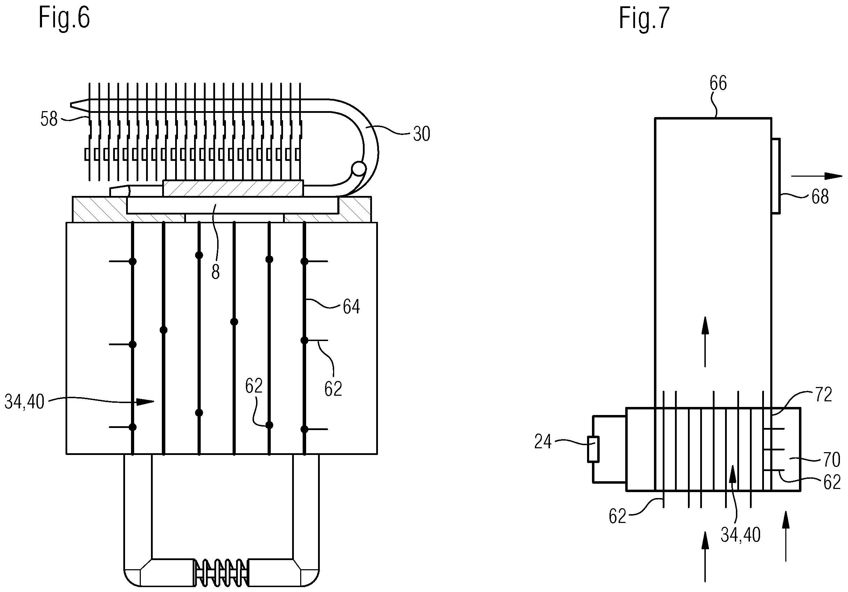

Eine derartige rechteckige Geometrie liegt auch bei der in FIG. 6 und 7 dargestellten Variante vor. Ein über das Gehäuse 46 hinaus ragendes Konvektionsgehäuse 66 mit einem am oberen Ende angeordneten Auslass 68 unterstützt den gewünschten Naturzug der kaminähnlichen Anordnung (ein ähnlicher Kaminaufsatz, allerdings nicht ganz so hoch, ist auch in FIG. 3 und 4 erkennbar).

Neben dem als Rekombinator 34 wirksamen ersten Strömungskanal 40, in dem das strömende Gasgemisch hinsichtlich der Konzentration seiner zündfähigen Bestandteile vermindert oder abgereichert wird, befindet sich in paralleler Anordnung ein vom ersten Strömungskanal 40 strömungsmäßig abgetrennter zweiter Strömungskanal 70 (Konvektionskanal) ohne Rekombinatorelemente, in dem keine Abreicherung der Konvektionsströmung erfolgt. Durch Durchbrechungen der Zwischenwand 72 sind Zünddrähte 62 vom ersten Strömungskanal 40 in den zweiten Strömungskanal 70 geführt. Diese Zünddrähte 62 werden durch die katalytischen Zonen im ersten Strömungskanal 40 beheizt und leiten im Sinne einer möglichst frühzeitigen Zündung die Zündenergie in den zweiten Strömungskanal 70, wo die Gasströmung durch die fehlende Abreicherung leichter entzündlich ist.

**Bezugszeichenliste**

| | | | |
|---|---|---|---|
| 2 | Zündsystem | 64 | Platte |
| 4 | Containment | 66 | Konvektionsgehäuse |
| 6 | Kernkraftwerk | 68 | Auslass |
| 8 | thermoelektrischer Generator | 70 | Strömungskanal |
| 10 | kalte Seite | 72 | Zwischenwand |
| 12 | heiße Seite | | |
| 14 | Halbleiterelement | | |
| 16 | Grenzfläche | | |
| 18 | Keramikschicht | | |
| 20 | Anschluss | | |
| 22 | Zündstromkreis | | |
| 24 | Zündelement | | |
| 26 | Wärmesenke | | |
| 28 | Wärmequelle | | |
| 30 | Wärmerohr | | |
| 32 | Wärmeleiter | | |
| 34 | katalytischer Rekombinator | | |
| 36 | Zündeinheit | | |
| 38 | Rohrwand | | |
| 40 | Strömungskanal | | |
| 42 | Zwischenwand | | |
| 44 | Ringkammer | | |
| 46 | Gehäuse | | |
| 48 | Füllmaterial | | |
| 52 | Verbindungsplatte | | |
| 54 | Schenkel | | |
| 56 | Schenkel | | |
| 58 | Wärmeleitblech | | |
| 60 | Trägerarm | | |
| 62 | Zünddraht | | |

## Patentansprüche

1. Zündsystem (2) zur Zündung brennbarer Gasgemische enthaltend Wasserstoff und Sauerstoff in einem Containment (4) einer kerntechnischen Anlage wobei das Zündsystem (2) ein elektrisches Zündelement (24), einen eine Mehrzahl von in Reihe geschalteten N- und P-dotierten Halbleiterelementen aufweisenden thermoelektrischen Generator (8), einen katalytischen Rekombinator (34) für das Gasgemisch und einen Strömungskanal (40) für das Gasgemisch umfasst, wobei der thermoelektrische Generator (8) als Stromquelle für das Zündelement (24) dient und wobei der katalytische Rekombinator (34) als Wärmequelle (28) für den thermoelektrischen Generator (8) dient, und wobei das Zündelement ein Heizdraht oder eine Glühkerze ist, wobei der Rekombinator (34) in dem Strömungskanal (40) ausgebildet ist,
**gekennzeichnet dadurch, dass** der thermoelektrische Generator (8) außerhalb des Strömungskanals (40) angeordnet ist.

2. Zündsystem (2) nach Anspruch 1, wobei der Strömungskanal (40) für einen Naturzug des Gasgemisches ausgelegt ist.

3. Zündsystem (2) nach einem der Ansprüche 1 oder 2, wobei ein Wärmerohr (30) zur Ableitung von Wärme vom thermoelektrischen Generator (8) vorhanden ist.

4. Zündsystem (2) nach einem der Ansprüche 1 bis 3, wobei der Rekombinator (34) durch Reaktionswärme aktivierbare Zünddrähte (62) zur Zündung des Gasgemischs aufweist.

5. Kerntechnische Anlage, insbesondere Kernkraftwerk (6), mit einem Containment (4) und mit einem im Containment (4) angeordneten Zündsystem (2) nach einem der Ansprüche 1 bis 4.

## Claims

1. An ignition system (2) for igniting combustible gas mixtures containing nitrogen and oxygen in a containment (4) of a nuclear plant, the ignition system (2) comprising an electric ignition element (24), a thermoelectric generator (8) including a plurality of N and P-doped semiconductor elements switched in series, a catalytic recombiner (34) for the gas mixture, and a flow channel (40) for the gas mixture, the thermoelectric generator (8) serving as a power source for the ignition element (24), and the catalytic recombiner (34) serving as a heat source (28) for the thermoelectric generator (8), and the ignition element being a heating wire or a glow plug, and the recombiner (34) being designed in the flow channel (40), **characterized in that** the thermoelectric generator (8) is arranged outside the flow channel (40).

2. The ignition system (2) of claim 1, wherein the flow channel (40) is designed for a natural draught of the gas mixture.

3. The ignition system (2) of any of claims 1 or 2, wherein a heat tube (30) is provided for removing heat from the thermoelectric generator (8).

4. The ignition system (2) of any of claims 1 to 3, wherein the recombiner (34) includes ignition wires (62) which can be activated by reaction heat, for igniting the gas mixture.

5. A nuclear plant, in particular a nuclear power plant (6), having a containment (4) and an ignition system (2) of any of claims 1 to 4, arranged in said containment (4).

## Revendications

1. Système d'allumage (2) conçu pour allumer des mélanges gazeux combustibles contenant de l'azote et de l'oxygène dans une enceinte de confinement (4) d'une installation nucléaire, le système d'allumage (2) comprenant un élément d'allumage (24), un générateur thermoélectrique (8) comprenant une pluralité d'éléments semiconducteurs doés en N et en P, montés en série, un recombinateur catalytique (34) pour le mélange gazeux, et un canal de flux (40) pour le mélange gazeux, le générateur thermoélectrique (8) servant de source de courant pour l'élément d'allumage (24) et le recombinateur catalytique (34) servant de source de chaleur (28) pour le générateur thermoélectrique (8) et l'élément d'allumage étant un fil de chauffage ou une bougie de préchauffage et le recombinateur (34) étant conçu dans le canal de flux (40), **caractérisé en ce que** le générateur thermoélectrique (8) est disposé en dehors du canal de flux (40).

2. Système d'allumage (2) selon la revendication 1, dans lequel le canal de flux (40) est conçu pour un tirage naturel du mélange gazeux.

3. Système d'allumage (2) selon l'une quelconque des revendications 1 ou 2, dans lequel un tuyau de chauffage (30) est pourvu pour dissiper de la chaleur du générateur thermoélectrique (8).

4. Système d'allumage (2) selon l'une quelconque des revendications 1 à 3, dans lequel le recombinateur (34) comprend des fils d'allumage (62) qui peuvent être activés par la chaleur de réaction, pour allumer le mélange gazeux.

5. Installation nucléaire, en particulier une centrale nucléaire (6), ayant une enceinte de confinement (4) et un système d'allumage (2) selon l'une quelconque des revendications 1 à 4, disposé dans dite enceinte de confinement (4).
